# EUROPEAN PATENT SPECIFICATION

(11) **EP 1 227 048 B1**
(45) Date of publication and mention of the grant of the patent: **19.05.2004**
(21) Application number: 01302988.9
(22) Date of filing: 29.03.2001
(51) Int. Cl.: B65D 75/58

(54) **Readily opened tubular sealed casing**
Récipient étanche tubulaire facilement ouvrable
Leicht zu öffnender rohrförmiger abgedichteter Behälter

(30) Priority: 26.01.2001 JP 2001018764
(43) Date of publication of application: 31.07.2002
(73) Proprietor: Japan Patent Management Co. Ltd., Tokyo (JP)
(72) Inventor: Amano, Hirozo, Kasugai-shi, Aichi-ken (JP); Abe, Toru, Chikushino-shi, Fukuoka-ken (JP); Hayashi, Keiichi, Toyonaka-shi, Osaka-fu (JP); Fukumori, Hirotsugu, Yokohama-shi, Kanagawa-ken (JP)
(74) Representative: King, James Bertram

(56) References cited:
- EP-A- 1 077 186
- DE-A- 2 362 351
- DE-U- 9 216 416
- US-A- 2 897 962
- US-A- 4 521 467
- US-A- 6 099 682

## Description

This invention relates to an improvement in a tubular sealed casing which is to be readily opened, the casing according to this invention comprising three or more layers of composite plastic film.

A monolayer plastic film based on a vinylidene chloride film has been used as a casing for processed meat and fish foods, dairy products such as cheese and butter as well as for confectioneries such as jelly. This casing is made by forming a plastic film into a tubular form so that top and rear surface of the film will be overlaid on each other along the length and then sealing the overlaid portion in the form of an envelope with a flap being left unsealed. The two ends are then closed by a metal wire or sealed using customary sealing methods.

When opening this casing, there are difficulties as this is done by cutting a portion of the film with a tool such as a knife and peeling the film off from the section. To overcome this difficulty in opening the casing, there have been proposed various methods including, for instance, the method in which a strip film stronger than the base film is fusion-bonded to a portion of the base film or the sealed section and the base film is tom by pulling the strip film. In another method a V-shaped notch or a slit shaped notch is provided in the portion of the base film which is non-heat sealed and the base film is torn from the notch. Another method uses weakened locations to enable a section non-heat sealed and the base film to be torn away.

Customer demands for non-chloride based plastic films will become more usual in the future. A casing based on non-chloride plastic film is used in the same way as the vinylidene chloride film described, but the capabilities of such a film as regards as a gas impermeability and the heat seal properties are required in the film itself and it is generally considered that a monolayer plastic film can not satisfy these needs. Composite films using a non-chloride film as a component thereof have been investigated. The opening means used for the vinylidene chloride monolayer film casing as described above does not provide the adaptability so as to be easily opened when applied to non-chloride-based film.

The above-described technology for easily opening a casing can be employed for the vinylidene chloride film because the film is adapted to be easily tom, and when a composite plastic film is used in place of the monolayer vinylidene chloride film, resistance of the composite plastic film to tearing is high and it is difficult to open a casing by tearing the film itself.

It is an object of the present invention to provided a tubular sealed casing of a composite plastic film which is heat-sealed to form an enclosure and which can be adapted to be easily opened without depending on notches conventionally used for giving the adaptability to be easily opened.

According to this invention there is provided a tubular sealed casing primarily for packaging foodstuffs comprising a plastic film formed into a tubular or sausage shape with overlapped edges which are heat sealed together leaving a non-heat sealed section forming a free edge of the upper film at the overlap to be grasped to tear open the casing to gain access to the contents, wherein the casing is formed from a composite laminated plastic film comprising three or more layers, the peel strength between the outer surface layer of the film when formed into a tubular shape and the adjacent intermediate layer is lower than the peel strength between the inner layer film and the intermediate layer adjacent thereto.

The peel strength between the outer layer film and the intermediate layer film may be in the range from 10 to 2000 g/15 mm. An opening means may be provided adjacent the heat-sealed section and along an edge thereof, said opening means may comprise a V-shaped notch, a slit or a weakness in the material such as a perforation, score line or the like.

This invention will now be further explained with reference to embodiments shown by way of examples and described in conjunction with the drawings. In the drawings:
Fig. 1 shows in a diagrammatic side view a composite plastic film for a casing according to the present invention;
Fig. 2 shows the film after curving to form a tubular body;
Fig. 3 shows the film used to seal a piece of sausage into a casing;
Fig. 4 shows the sealed casing is being opened by grasping the unsealed portion thereof with fingers;
Fig. 5 shows the sealed casing partly opened;
Fig. 6 shows the sealed casing nearly fully opened; and
Fig. 7 shows a casing as a control being opened.

With reference to the drawings and summarised briefly, this invention uses a tubular sealed casing 1 for packaging foodstuff which comprises a composite plastic film 2 formed into a tubular shape with the edges overlapped and heat sealed at 7 with a non-heat sealed section 8 left along an edge the upper film. The film 2 comprises a composite laminated plastic film comprising three (or more) layers 3, 4, 5 with the peel strength between the outer layer 5 and intermediate layer 3 being lower as compared to the peel strength between the inner layer 4 and intermediate layer 3. A disruption 12 of the outer layer film 5 produces separation from the intermediate film 3 adjacent the heat sealed section 7 preferentially when the casing is torn open facilitated by the slits 9. The outer layer film 5 is peeled at 13 from the intermediate film 3, so that the casing can easily be opened.

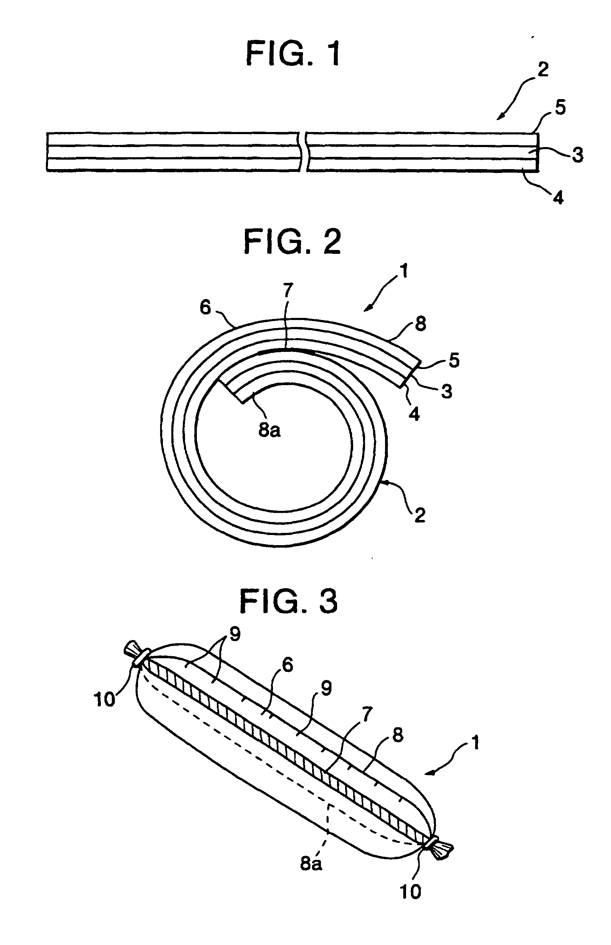

More specifically and referring to the drawings, Fig. 1 shows a cross-section of a base film used to form a casing according to the present invention. This base film 2 comprises three film layers; an intermediate layer film 3, an inner layer film 4, and an outer layer film 5, all of which are made from a chlorine-free film. The inner layer film 4 and outer layer film 5 are films each adapted to be heat-sealed, and the intermediate layer film 3 is a film having the capability of functioning as a gas barrier or a UV light absorber.

The peel strength between the outer layer film 5 and the intermediate layer film 3 is set to a level lower than the peel strength between the intermediate film 3 and the inner layer film 4.

This three-layered base film 2 is formed into a tubular casing 1 by curving the base film 2 with the two edges thereof overlapped as shown in Fig. 2 and then heat-sealing the overlaid section 6 using a constant width heat-sealed section 7 and leaving sections 8, 8a non-heat sealed at inner and outer edges of this heat-sealed section 7.

Fig. 3 shows a casing with a product placed therein sealed by binding the two ends thereof with a metal wire 10. The two end sections may be sealed by heat-sealing, so that the sealing means in the present invention is not limited to the metal wire 10 as shown.

In the sealed casing 1 above, intermittent spaced slits or notches 9 each functioning as an opening means are provided in the non-heat sealed section 8 with a predetermined spacing therebetween, and the casing 1 is opened from these notches 9.

The V-shaped notches or weaknesses conventionally used for this purpose may be used as an opening means in place of the slit notches.

Further only one notch or slit may be provided as the opening means, or a plurality of notches or slits may be provided so that the casing may be opened from a plurality of positions.

When the casing 1 based on the composite film is to be opened using a plurality of notches or slits in the non-heat sealed section 8 as described in relation to the conventional technology, the tearing function is poor, and the casing can not be easily opened as described above.

The casing can not easily be opened because, even if tearing is started from the section with notches or slits provided therein, the composite plastic film itself can not easily be torn like a conventional monolayer vinylidene chloride film and the seal strength of the heat-sealed section 7 is high.

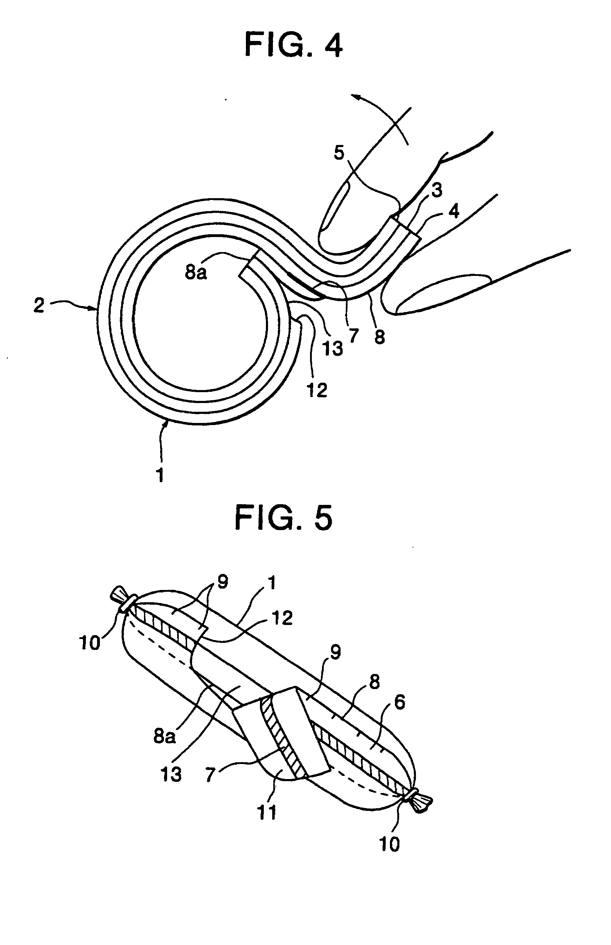

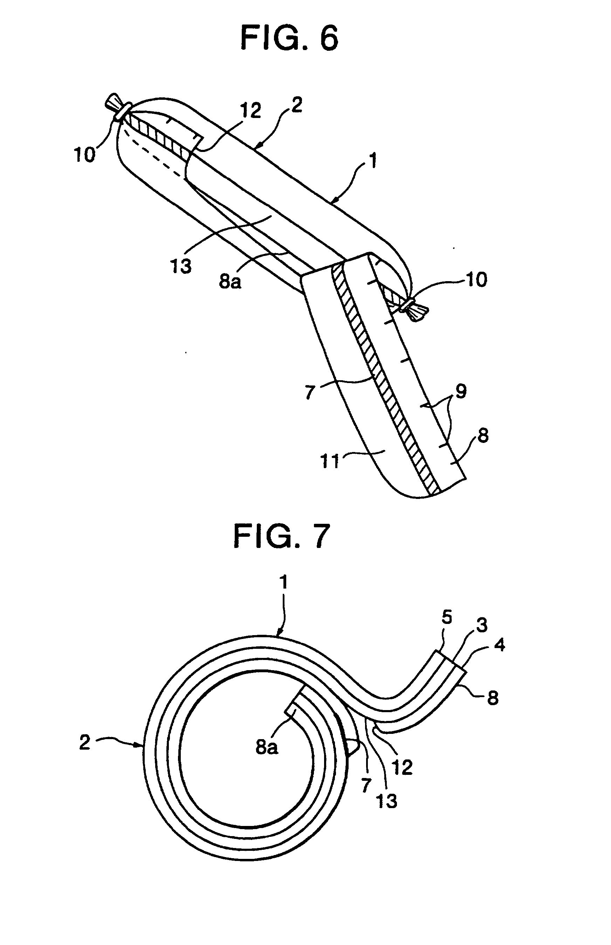

To overcome the problem, the present invention provides notches or slits in the non-heat sealed section and a peel strength between the outer layer film 5 and intermediate layer film 3 of the based film 2 which is a lower as compared to the peel strength between the inner layer film 4 and intermediate film 3. The peel strength may be in a range from 10 to 2000 g/15 mm. As a result, after tearing is started from the slits 9 in the non-heat sealed section 8, when an opening tab 11 is pulled as shown in Fig. 5 and Fig. 6, the outer layer film 5 is broken and torn at the heat-sealed section 7 and the outer layer film 5 is peeled off from the internal layer film 3, so that the casing can easily be opened. This feature can more clearly seen and understood from the cross-sectional view shown in Fig. 4, and with this feature, disruption 12 of the outer layer film 5 occurs at an edge section of the heat-sealed section 7 when the casing 1 is opened, and then peeling at 13 from the intermediate layer film 3 occurs, which causes a section up to the non-heat sealed section 8a inside the overlaid section to be peeled off.

In the base film 2 formed as a composite plastic film used in the present invention it is essential, because of the necessity of heat seal 7 for the overlaid section 6, that both the inner layer film 4 and outer layer film 5 are plastic films which can be heat-sealed, and there is no limitation over the materials for forming the composite film providing they are compatible for making the composite film. The intermediate film 3 (functioning, for instance, as a gas barrier) should satisfy the requirements of the contents to be placed in the casing (to keep freshness, for instance).

The peel strength between the outer layer film 5 and intermediate layer film 3 can be easily made to be a controlled lower level than the peel strength between other layers by selecting processing conditions for bonding between the outer layer film 5 and intermediate layer film 3 and/or components for the two film layers, and there is no limit to the method used.

Further the methods of providing one or a plurality of notches or slits at an edge of the non-heat sealed section 8 include, but not limited to the method in which one or a plurality of notches, such as one or a plurality of slits or V-shaped notches, are provided in the transverse direction along an edge of the non-heat sealed section 8 in a packaging step. The method in which a number of slits are provided in the transverse direction in the non-heat sealed section 8, that is the method by which a number of slits are provided at pre-specified sections over the width may use a metal roller over which a film passes in the film processing step performed before the film is formed into a casing and using a tool having many blade-like projections on the periphery. Other means for providing an opening start method may be employed for the purpose of this invention.

### Example:

A composite plastic film was manufactured by using a commercially available non-extended polypropylene 15µ as the inner layer film 4, a commercially available extended nylon film 20µ as the intermediate layer film 3, and a commercially available non-extended polypropylene film 15µ as the outer layer 5. The inter-layer peel strength between the outer layer film 5 and intermediate layer film 3 is set to 200 g/15 mm by selecting an appropriate adhesive for adhesion between the outer layer film 5 and intermediate layer film 3. The adhesive for adhesion between the inner layer 4 and intermediate layer film 3 is set so that the inter-layer peel strength between the inner layer film 4 and intermediate laver film 3 is set to 500 g/15 mm being higher.

A piece of processed fish meal sausage was packed using the film described above by a vertically positioned casing filler/ packager, and the slits 9 were provided for making it easier to open the casing at the non-heat sealed section 8 in the overlapped section 6 with both edges of the casing 1 bonded with the metal wire 10, and thus the tubular sealed casing 1 was formed as shown in Fig. 3.

Then, a test was performed to check ease of opening the casing using the slits 9 in the casing 1 as the opening start position. In this test when the non-heat sealed section 8 was pulled (Fig. 4), disruption 12 of the outer layer film 5 from an edge section of the heat-sealed section 7 occurred and the section with low inter-layer peel strength up to the inside non-heat sealed section 8a between the outer layer film 5 and intermediate layer film 3 was peeled off at 13, so that the casing could easily be opened.

### Control

Fig. 7 shows a peeling phenomenon in the case where the peel strength between the inner layer film 4 and the intermediate layer film 3 was set to 300 g/15 mm and the peel strength between the outer layer film 5 and the intermediate layer film 3 set to 600 g/15 mm, and in this case disruption 12 and peeling 13 occur between the intermediate layer film 3 and inner layer film 4, so that the casing 1 cannot be opened.

It should be noted that the content in the casing may be a product other than fish sausage.

As described above, using conventional technology for opening a tubular sealed casing based on vinylidene chloride film heat-sealed with an overlap and using a composite plastic film for packing a content therein, the casing can not easily be opened, but with the present invention, the casing can be opened quite easily.

When disposed of by burning or by any other method, the monolayer vinylidene chloride film causes environmental contamination by generation of dioxins, but when the composite plastic film based on a non-chlorine based film is used, such environmental contamination does not occur, and a casing for food products compatible with the environment can be provided.

## Claims

1. A tubular sealed casing primarily for packaging foodstuffs comprising a plastic film formed into a tubular or sausage shape (1) with overlapped edges which are heat sealed together (7) leaving a non-heat sealed section (8, 8a) forming a free edge of the upper film at the overlap to be grasped to tear open the casing to gain access to the contents, **characterised in that** the casing (1) is formed from a composite laminated plastic film (2) comprising three (3, 4, 5) or more layers, the peel strength between the outer surface layer of the film (5) when formed into a tubular shape and the adjacent intermediate layer (3) is lower than the peel strength between the inner layer film (4) and the intermediate layer (3) adjacent thereto.

2. A tubular sealed casing according to Claim 1, **characterised in that** the peel strength between the outer layer film (5) and the intermediate layer film (3) is in the range from 10 to 2000 g/15 mm.

3. A tubular sealed casing according to Claim 1 or 2, **characterised in that** an opening means (9) is provided adjacent the heat-sealed section (7) and along an edge thereof.

4. A tubular sealed casing according to Claim 3, **characterised in that** said opening means (9) comprises a V-shaped notch, a slit or a weakness.

5. A tubular sealed casing according to any preceding Claim. **characterised in that** the inner and outer layers (4, 5) comprise polypropylene films and the intermediate layer (3) comprises a nylon film.

## Patentansprüche

1. Rohrförmiger geschlossener Behälter, vorwiegend zur Lebensmittelverpackung, umfassend einen Kunststofffilm, der rohr- oder wurstförmig (1) mit sich überlappenden, miteinander schmelzverklebten (7) Rändern ausgebildet wurde, wobei ein nicht-schmelzverklebter Abschnitt (8, 8a) verbleibt, der einen freien Rand des oberen Films an der Überlappungsstelle bildet, den man zum Aufreißen des Behälters ergreift, um dadurch Zugang zum Behälterinhalt zu erlangen, **dadurch gekennzeichnet, dass** der Behälter (1) aus einem verbundstofflaminierten Kunststofffilm (2) mit drei (3, 4, 5) oder mehr Schichten besteht, wobei die Abziehfestigkeit zwischen der äußeren Oberflächenschicht des Films (5) bei dessen rohrförmiger Ausformung und der benachbarten Zwischenschicht (3) geringer als die Abziehfestigkeit zwischen dem Film (4) der inneren Schicht und der auf diese folgenden Zwischenschicht (3) ist.

2. Rohrförmiger geschlossener Behälter nach Anspruch 1, **dadurch gekennzeichnet, dass** die Abziehfestigkeit zwischen dem Film (5) der äußeren Schicht und dem Film (3) der Zwischenschicht im Bereich zwischen 10 und 2000 g/15 mm liegt.

3. Rohrförmiger geschlossener Behälter nach Anspruch 1 oder 2, **dadurch gekennzeichnet, dass** ein Öffnungsmittel (9) in der Nähe sowie entlang eines Randes des schmelzverklebten Abschnitts (7) vorgesehen ist.

4. Rohrförmiger geschlossener Behälter nach Anspruch 3, **dadurch gekennzeichnet, dass** es sich bei dem Öffnungsmittel (9) um eine V-förmige Einkerbung, einen Schlitz oder eine Schwachstelle handelt.

5. Rohrförmiger geschlossener Behälter nach einem der voranstehenden Ansprüche, **dadurch gekennzeichnet, dass** es sich bei der inneren und der äußeren Schicht (4, 5) um Polypropylenfilme und bei der Zwischenschicht (3) um einen Nylonfilm handelt.

## Revendications

1. Boîtier tubulaire scellé utilisé dans un premier temps pour le conditionnement des denrées alimentaires comprenant un film plastique ayant la forme d'une saucisse ou d'un tube (1) présentant des bordures de recouvrement qui sont scellées ensemble de façon thermique (7) en laissant une section scellée de façon non thermique (8, 8a) formant un bord libre du film supérieur au niveau du recouvrement à saisir pour ouvrir le boîtier et pour accéder à son contenu, **caractérisé en ce que** le boîtier (1) est formé par un film plastique laminé composite (2) comprenant trois (3, 4, 5) ou plusieurs couches, **en ce que** la résistance au pelage entre la couche de la surface externe du film (5) une fois en forme de tube et de la couche intermédiaire adjacente (3) est inférieure à la résistance au pelage entre le film de la couche interne (4) et la couche intermédiaire (3) adjacente de celui-ci.

2. Boîtier tubulaire scellé selon la revendication 1, **caractérisé en ce que** la résistance au pelage entre le film de la couche externe (5) et le film de la couche intermédiaire (3) s'inscrit dans une plage allant de 10 à 2 000 g/15 mm.

3. Boîtier tubulaire scellé selon la revendication 1 ou 2, **caractérisé en ce qu'**un moyen formant ouverture (9) est fourni de façon adjacente à la section scellée thermiquement (7) et le long de la bordure de celle-ci.

4. Boîtier tubulaire scellé selon la revendication 3, **caractérisé en ce que** lesdits moyens formant ouverture (9) comprennent une entaille en forme de V, une fente ou une faiblesse.

5. Boîtier tubulaire scellé selon l'une quelconque des revendications précédentes, **caractérisé en ce que** les couches externe et interne (4, 5) comprennent des films polypropylènes et **en ce que** la couche intermédiaire (3) comprend un film de nylon.
